# FASCICULE DE BREVET EUROPEEN

(11) **EP 3 718 271 B1**
(45) Date de publication et mention de la délivrance du brevet: **26.07.2023**
(21) Numéro de dépôt: 18819328.8
(22) Date de dépôt: 22.11.2018
(51) Int. Cl.: H04L 47/26, H04W 4/24, H04L 43/0823, H04L 43/16, H04L 47/11, H04L 47/2416

(54) **PROCÉDÉS DE DÉTECTION, DE GESTION ET DE RELAIS D'UN PROBLÈME DE COMMUNICATION MULTIMÉDIA, ENTITÉS D'EXÉCUTION, DE CONTRÔLE ET DE GESTION DE RÈGLES ET PROGRAMME D'ORDINATEUR CORRESPONDANTS**
VERFAHREN ZUR ERKENNUNG, VERWALTUNG UND WEITERLEITUNG EINES MULTIMEDIA-KOMMUNIKATIONSPROBLEMS, ENTSPRECHENDE AUSFÜHRUNGS-, KONTROLL- UND REGELVERWALTUNGSEINHEITEN UND COMPUTERPROGRAMM
METHODS FOR DETECTING, MANAGING AND RELAYING A MULTIMEDIA COMMUNICATION PROBLEM, CORRESPONDING EXECUTION, CHECKING AND RULE MANAGEMENT ENTITIES AND COMPUTER PROGRAM

(30) Priorité: 30.11.2017 FR 1761445
(43) Date de publication de la demande: 07.10.2020
(73) Titulaire: Orange, 92130 Issy-les-Moulineaux (FR)
(72) Inventeur: DORÉE, José, 92326 Châtillon Cedex (FR); LE ROUZIC, Jean-Claude, 92326 Châtillon Cedex (FR)
(74) Mandataire: Vidon Brevets & Stratégie
(86) Numéro de dépôt international: PCT/FR2018/052955
(87) Numéro de publication internationale: WO 2019/106262

(56) Documents cités:
- EP-A1- 2 493 139
- US-A1- 2014 173 085

## Description

### 1. Domaine de l'invention

Le domaine de l'invention est celui des communications multimédia au sein d'au moins un réseau de communication.

Plus précisément, l'invention offre une solution pour la gestion d'un problème de communication survenant au cours d'une session multimédia, encore appelé problème de communication multimédia.

L'invention trouve notamment, mais non exclusivement, des applications dans les réseaux utilisant l'architecture PCC (en anglais « Policy and Charging Control », en français « contrôle des politiques et de la tarification »), telle que définie par le 3GPP (« Third Génération Partnership Project »), et le protocole IP dans le plan média.

### 2. Art antérieur

Afin d'offrir à leurs abonnés de nouveaux services, les opérateurs de téléphonie ont commencé le déploiement de nouveaux réseaux de communication pour la transmission de la voix sur IP, comme les réseaux VoLTE (en anglais « Voice over LTE », en français « voix sur LTE) ») ou VoWiFi (en anglais « Voice over Wifi », en français « voix sur Wifi »).

Ces réseaux disposent de quelques mécanismes de supervision permettant de limiter la durée des communications en cas de problème, par exemple en cas de mauvais raccrochage d'un combiné téléphonique. Ces mécanismes permettent notamment d'éviter la surfacturation des clients, et de protéger les réseaux en évitant que leurs ressources soient utilisées alors qu'un problème est survenu.

Parmi ces mécanismes de supervision des appels, on peut citer les temporisateurs de session du protocole SIP, tels que décrits dans le document RFC 4028 (« Session Timers in the Session Initiation Protocol (SIP) »), qui permettent aux agents SIP de libérer les appels en l'absence de réponse aux messages de supervision du plan de signalisation. De tels agents SIP sont par exemple de type UE (en anglais « User Equipement », en français « équipement utilisateur »), x-CSCF (en anglais « x - Call/Session Control Function », en français « Fonction de Commande de Session/d'Appel »), AS (en anglais « Application Server », en français « serveur d'application »).

On peut également citer les mécanismes de détection d'inactivité média, mis en oeuvre sur les passerelles d'accès (AGW, en anglais « access gateway »), qui libèrent la communication si un équipement du plan média (par exemple la passerelle d'accès) détecte l'absence de flux média pendant une durée configurable par l'opérateur. On rappelle qu'on entend notamment par flux média un flux associé à un type de média, comme un flux audio, un flux vidéo, un flux portant des données de type application, un flux portant des données de type texte, un flux portant des données de type image, etc.

Néanmoins, il existe des configurations d'appel ou des architectures réseaux pour lesquelles ces mécanismes de supervision d'appel ne sont pas, ou sont peu, efficaces, et pourraient être améliorés.

Notamment, si le terminal associé à un client se situe, dans le réseau, derrière un routeur de type traduction d'adresse réseau (NAT/P - « network address translation ») et qu'il perd sa connectivité réseau, le routeur NAT/P renverra, vers un équipement du plan média, des messages ICMP (en anglais « Internet Control Message Protocol », en français « Protocole de message de contrôle sur Internet ») de type « Destination Unreachable » (en français « destination injoignable). De tels messages ICMP, notamment ICMP Type 3 + Code 1,2 ou 3, permettent d'indiquer à l'équipement du plan média que la destination qu'il cherche à joindre n'est plus accessible. On rappelle que le protocole ICMP, tel que défini dans le document RFC 792 notamment, permet de contrôler les erreurs de transmission, en informant un équipement émetteur d'un problème sur le réseau. Le protocole IP ne gère quant à lui que le transport de paquets, et ne permet pas l'envoi de messages d'erreurs.

Or si le terminal du client utilise la technologie VoLTE ou VoWiFi, le protocole ICMP n'est pas autorisé dans le réseau. En effet, comme décrit dans la norme TS 29.214 (« Universal Mobile Telecommunications System (UMTS); Policy and charging control over Rx reference point »), seuls les flux négociés lors de la phase préalable à l'établissement d'une communication, conformément au protocole SDP (« Session Description Protocol ») de description de sessions, sont autorisés dans le réseau. Or le protocole ICMP, qui est utilisé pour contrôler les erreurs de transmission, n'est pas négocié dans le SDP lors de la phase préalable à l'établissement d'une communication, et n'est donc pas autorisé lors de la phase de communication.

En l'absence d'autorisation du protocole ICMP avec les terminaux utilisant la technologie VoLTE ou VoWiFi, les messages ICMP ne peuvent pas être utilisés pour détecter un problème de communication lors de la phase de communication. Par conséquent, la communication ne peut pas être libérée avant soit l'expiration d'un temporisateur d'inactivité média, soit un audit du plan de signalisation, tel que décrit dans le document RFC 4028 précité.

Si l'on considère une libération de la communication au prochain audit du plan de signalisation, la libération de la communication n'est pas immédiate. En effet, dans les réseaux actuels, la durée entre deux audits est habituellement de l'ordre d'une heure.

Si l'on considère une libération de la communication sur expiration du temporisateur d'inactivité média, les délais varient habituellement de quelques secondes à quelques minutes. On note cependant qu'un tel temporisateur n'est classiquement mis en oeuvre que sur la passerelle d'accès. Or une telle passerelle d'accès n'est pas nécessairement présente dans l'architecture utilisée, et reste optionnelle dans l'architecture IMS (IP Multimedia Subsystem).

Un exemple est décrit dans le document EP2493139 A1.

Il existe donc un besoin pour une nouvelle technique permettant de détecter un problème de communication, et qui soit notamment compatible avec les architectures mettant en oeuvre la technologie VoLTE ou VoWiFi.

### 3. Exposé de l'invention

Selon au moins un mode de réalisation, l'invention propose un procédé de détection d'un problème de communication multimédia, mis en oeuvre par une entité d'exécution.

Selon l'invention, un tel procédé de détection comprend une phase de traitement mettant en oeuvre :
- la réception d'au moins un message, dit message reçu, appartenant à au moins un flux à surveiller se rapportant à au moins un flux média,
- la vérification d'une correspondance entre ledit au moins un message reçu et au moins une règle associée audit au moins un flux à surveiller, et
- lorsque ledit au moins un message reçu correspond à ladite règle, l'envoi à une entité de contrôle distincte de ladite entité d'exécution, par l'intermédiaire d'une entité de gestion de règles, d'un message de détection d'erreur.

Ainsi, on définit selon l'invention un ensemble de règles, permettant à une entité d'exécution de détecter un problème de communication multimédia sur le réseau et d'en informer une entité de contrôle.

L'entité d'exécution selon l'invention est donc dotée d'une certaine intelligence, puisqu'elle peut analyser les messages qu'elle reçoit et déclencher un message de détection d'erreur si les messages reçus vérifient une règle prédéfinie.

Ainsi, un problème de communication peut être détecté rapidement, et par suite une action engagée (comme la libération de la communication), sans attendre l'expiration du temporisateur d'inactivité média ou le prochain audit du plan de signalisation.

En particulier, ledit au moins un flux à surveiller est de type flux ICMP, notamment un flux ICMP se rapportant à au moins un flux média.

Lorsque le flux à surveiller est de type ICMP, le message reçu est un message d'erreur, par exemple de type « Destination Unreachable ». Dans ce cas, le procédé de détection d'un problème de communication peut notamment mettre en oeuvre une étape d'identification d'un flux média à l'origine du message d'erreur. La ou les règles associées au flux à surveiller peuvent notamment dépendre du flux média à l'origine du message d'erreur.

Il est ainsi possible de déterminer rapidement un problème de communication, par exemple une perte de joignabilité, par l'analyse des messages ICMP, notamment dans le contexte d'une architecture 3GPP PCC.

Par exemple, suite à l'arrêt d'une application sur un client (terminal appelant par exemple), le système d'exploitation gérant l'application émet classiquement des messages ICMP vers le distant (terminal appelé par exemple), l'application ayant libéré des ressources réseau.

L'autorisation de l'exploitation des messages ICMP, dans le contexte de l'invention, permet ainsi d'identifier l'injoignabilité du terminal appelant (dans l'exemple considéré).

En particulier, suite à une analyse des messages ICMP reçus, un problème de communication peut être rapidement identifié. En effet, la cadence d'émission des paquets RTP (Real-Time Transport Protocol) est classiquement de 20 ms. Un problème de communication peut donc être confirmé et signalé à l'entité de contrôle dans des délais très brefs. Par exemple, un problème de communication est détecté si le nombre de paquets ICMP reçus dépasse un seuil configurable dans un délai également configurable. Dans le cas d'un flux RTP classique, la réception de 10 messages ICMP consécutifs permet par exemple de confirmer un problème de connectivité. A la cadence de 20 ms par paquet RTP, le problème est confirmé en 200 ms.

Selon un mode de réalisation particulier, le procédé de détection comprend une phase de configuration préalable à ladite phase de traitement, mettant en oeuvre la réception d'un message de requête en notification de détection d'erreur, transmis par ladite entité de contrôle par l'intermédiaire de ladite entité de gestion de règles, ledit message de requête en notification de détection d'erreur portant ladite au moins une règle.

Ainsi, l'ensemble de règles permettant à une entité d'exécution de détecter un problème de communication multimédia sur le réseau peut être défini par l'entité de contrôle, puis transmis à l'entité d'exécution via l'entité de gestion de règles.

En particulier, si ladite au moins une règle définit un seuil de détection d'un problème de communication à partir d'un nombre prédéterminé de messages et une période prédéterminée, ledit message de détection d'erreur est généré, et envoyé à ladite entité de contrôle, lorsque le nombre de messages reçus pendant ladite période prédéterminée est supérieur ou égal au nombre prédéterminé de messages.

En d'autres termes, un message de détection d'erreur de type « franchissement de seuil » peut être envoyé à l'entité de contrôle.

Dans un autre mode de réalisation, l'invention concerne une entité d'exécution correspondante, apte à détecter un problème de communication multimédia.

Une telle entité d'exécution est notamment adaptée à mettre en oeuvre le procédé de détection décrit précédemment. Ainsi, une telle entité peut comporter les différentes caractéristiques relatives au procédé de détection selon l'invention, qui peuvent être combinées ou prises isolément.

Par exemple, une telle entité d'exécution est de type PCEF (en anglais « Policy and Charging Enforcement Function », en français « fonction de mise en application des politiques et de la tarification »), et peut notamment être intégrée à une passerelle d'accès.

Une telle entité d'exécution peut notamment être une entité purement logicielle, ou une entité physique, comprenant des moyens physique et/ou logiciels.

L'invention concerne par ailleurs, selon au moins un mode de réalisation, un procédé de gestion d'un problème de communication multimédia, mis en oeuvre par une entité de contrôle.

Selon l'invention, un tel procédé de gestion comprend une phase de traitement mettant en oeuvre :
- la réception d'un message de détection d'erreur, généré par une entité d'exécution distincte de ladite entité de contrôle en tenant compte d'au moins une règle associée à au moins un flux à surveiller se rapportant à au moins un flux média, et transmis par l'intermédiaire d'une entité de gestion de règles, et
- une action sur ladite communication à réception dudit message de détection d'erreur.

Ainsi, une action peut être déclenchée dans les meilleurs délais à réception d'un message de détection d'erreur, i.e. sans attendre l'expiration du temporisateur d'inactivité média ou le prochain audit du plan de signalisation.

Selon un mode de réalisation particulier, le procédé de gestion comprend une phase de configuration préalable à ladite phase de traitement, mettant en oeuvre :
- la définition de ladite au moins une règle ; et
- la transmission d'un message de requête en notification de détection d'erreur à ladite entité d'exécution, par l'intermédiaire de ladite entité de gestion de règles, ledit message de requête en notification de détection d'erreur portant ladite au moins une règle. Comme indiqué précédemment, l'entité de contrôle peut ainsi définir un ensemble de règles permettant à une entité d'exécution de détecter un problème de communication multimédia sur le réseau, puis transmettre ces règles à l'entité d'exécution via l'entité de gestion de règles.

En particulier, ladite au moins une règle définit un seuil de détection d'un problème de communication à partir d'un nombre prédéterminé de messages reçus sur une période prédéterminée.

Par exemple, lorsque les messages reçus sont de type ICMP, un message de détection d'erreur est déclenché si 20 messages ICMP sont reçus dans un délai d'une seconde.

Le message de requête en notification de détection d'erreur porte également un attribut relatif à au moins un type de flux autorisé pour transporter des informations sur des flux média.

Par exemple, le message de requête en notification de détection d'erreur porte au moins un attribut indiquant que les flux ICMP de type 3 sont autorisés dans le sens « montant » (i.e. en direction du coeur de réseau).

En particulier, le message de requête en notification de détection d'erreur porte également un attribut relatif à au moins un flux média auquel se rapporte le flux à surveiller, ce dernier étant par exemple un flux ICMP.

Dans un autre mode de réalisation, l'invention concerne une entité de contrôle correspondante, apte à gérer un problème de communication multimédia.

Une telle entité de contrôle est notamment adaptée à mettre en oeuvre le procédé de gestion décrit précédemment. Ainsi, une telle entité peut comporter les différentes caractéristiques relatives au procédé de gestion selon l'invention, qui peuvent être combinées ou prises isolément.

Par exemple, une telle entité de contrôle est de type AF, notamment P-CSCF.

Une telle entité de contrôle peut notamment être une entité purement logicielle, ou une entité physique, comprenant des moyens physique et/ou logiciels.

L'invention concerne également, selon au moins un mode de réalisation, un procédé de relais d'un problème de communication multimédia, mis en oeuvre par une entité de gestion de règles.

Selon l'invention, un tel procédé de relais comprend une phase de traitement mettant en oeuvre :
- la réception d'un message de détection d'erreur, généré par une entité d'exécution en tenant compte d'au moins une règle associée à au moins un flux à surveiller se rapportant à au moins un flux média, et
- la transmission dudit message de détection d'erreur à une entité de contrôle distincte de ladite entité d'exécution.

Un tel procédé de relais permet donc de mettre en forme et de relayer les messages entre une entité de contrôle et une entité d'exécution. Il est notamment adapté à recevoir, à mettre en forme et à renvoyer les messages générés par les procédés de détection et de gestion décrits précédemment, et présente donc les mêmes avantages que ces procédés.

En particulier, un tel procédé de relais comprend une phase de configuration préalable à ladite phase de traitement, mettant en oeuvre :
- la réception d'un message de requête en notification de détection d'erreur, transmis par ladite entité de contrôle, ledit message de requête en notification de détection d'erreur portant ladite au moins une règle, et
- la transmission dudit message de requête en notification de détection d'erreur à ladite entité d'exécution.

Dans un autre mode de réalisation, l'invention concerne une entité de gestion de règles correspondante, apte à relayer un problème de communication multimédia.

Une telle entité de gestion de règles est notamment adaptée à mettre en oeuvre le procédé de relais décrit précédemment. Ainsi, une telle entité peut comporter les différentes caractéristiques relatives au procédé de relais selon l'invention, qui peuvent être combinées ou prises isolément.

Par exemple, une telle entité de gestion de règles est de type PCRF (en anglais « Policy and Charging Rules Function », en français « fonction de règles des politiques et de la tarification »).

Une telle entité de gestion de règles peut notamment être une entité purement logicielle, ou une entité physique, comprenant des moyens physique et/ou logiciels.

Ces entités de contrôle, de gestion de règles et d'exécution définissent l'architecture 3GPP PCC.

Ainsi, dans un mode de réalisation particulier, l'invention permet la détection rapide d'un problème de communication par l'analyse des messages ICMP dans l'architecture 3GPP PCC, afin de prendre les mesures appropriées.

Dans un autre mode de réalisation, l'invention concerne un ou plusieurs programmes d'ordinateur comportant des instructions pour la mise en oeuvre d'au moins un procédé tel que décrit ci-dessus, lorsque ce ou ces programmes sont exécutés par un processeur.

Dans encore un autre mode de réalisation, l'invention concerne un ou plusieurs supports d'informations, inamovibles, ou partiellement ou totalement amovibles, lisibles par un ordinateur, et comportant des instructions d'un ou plusieurs programmes d'ordinateur pour l'exécution des étapes d'au moins un procédé tel que décrit ci-dessus.

L'invention est définie dans les revendications indépendantes.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 illustre les principales étapes mises en oeuvre pour la détection, le relais et la gestion d'un problème de communication multimédia selon au moins un mode de réalisation ;
- la figure 2 illustre un exemple de mise en oeuvre de l'invention dans un réseau de communication mettant en oeuvre une architecture PCC selon au moins un mode de réalisation ;
- la figure 3 présente un chronogramme illustrant les messages échangés entre les différentes entités du réseau de communication selon la figure 2 ; et
- les figures 4 à 6 présentent respectivement la structure simplifiée d'une entité d'exécution, d'une entité de contrôle, et d'une entité de gestion des règles selon au moins un mode de réalisation.

### 5. Description d'un mode de réalisation de l'invention

### 5.1 Principe général

L'invention se place dans le contexte d'un réseau de communication mettant en oeuvre une architecture de type PCC comprenant une entité de contrôle, une entité de gestion de règles, et une entité d'exécution.

Le principe général de l'invention repose sur la définition de règles et la vérification de ces règles pour détecter un problème de communication multimédia dans le réseau de communication. Ladite communication peut impliquer des points d'extrémité quelconques, par exemple deux terminaux d'abonnés, ou un serveur vocal et un abonné, ou deux machines connectées, et ainsi de suite.

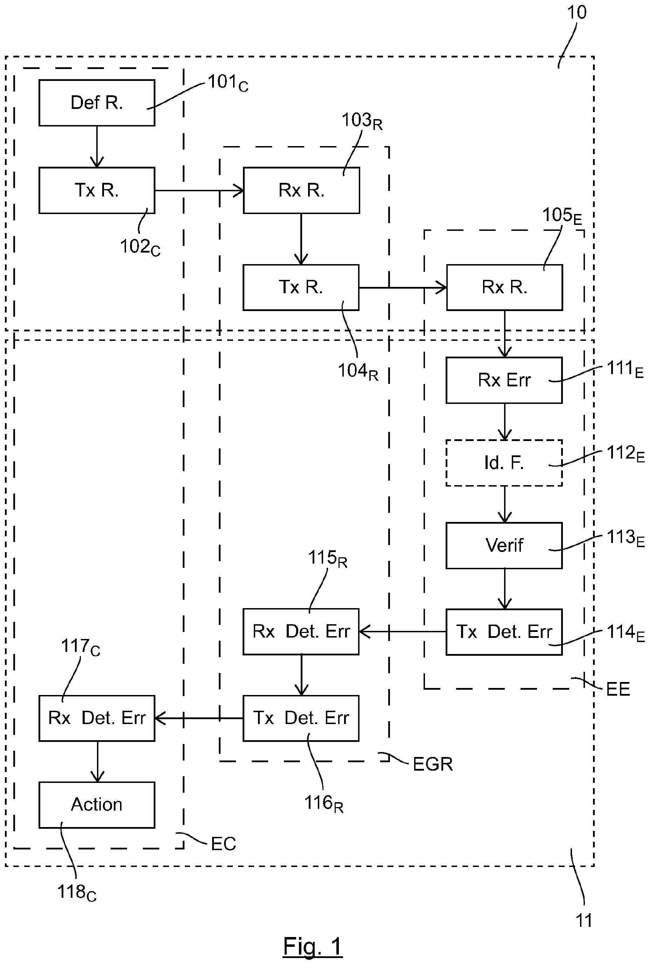

On présente, en relation avec la figure 1, les principales étapes mises en oeuvre pour détecter, relayer et gérer un problème de communication multimédia, dans un réseau de communication mettant en oeuvre au moins une entité de contrôle EC, une entité de gestion de règles EGR, et une entité d'exécution EE, ladite entité de contrôle EC et ladite entité d'exécution EE étant des entités distinctes.

Au cours d'une phase de traitement 11, l'entité d'exécution EE reçoit 111_{E} au moins un message appartenant à un flux à surveiller. Par exemple, le flux à surveiller est de type ICMP et le message reçu est un message d'erreur ICMP (Rx Err.).

Lorsque le ou les messages reçus sont de type ICMP, l'entité d'exécution EE peut analyser 112_{E} le ou les messages d'erreur reçus, de façon à identifier le ou les flux média ayant provoqué l'émission du ou des messages d'erreur (Id. F.).

L'entité d'exécution EE vérifie 113_{E} alors la correspondance entre le ou les messages reçus et au moins une règle associée au flux à surveiller (Verif.). En d'autres termes, l'entité d'exécution EE vérifie si le ou les messages reçus remplissent au moins une condition définie par au moins une règle connue de l'entité d'exécution. En particulier, la ou les règles associées au flux à surveiller peuvent dépendre du ou des flux média à l'origine du message d'erreur.

Les règles peuvent notamment être préalablement définies et stockées dans une mémoire de l'entité d'exécution, ou dans une base de données accessible par l'entité d'exécution. Les règles peuvent également être définies par l'entité de contrôle au cours d'une phase préalable de configuration 10, présentée ci-après.

Lorsque le ou les messages reçus correspondent à la règle, l'entité d'exécution EE envoie 114_{E} à l'entité de gestion de règles EGR un message de détection d'erreur (Tx Det. Err.).

L'entité de gestion de règles EGR reçoit 115_{R} donc le message de détection d'erreur, généré par l'entité d'exécution EE en tenant compte d'au moins une règle associée au flux à surveiller (Rx. Det. Err).

L'entité de gestion de règles EGR met en forme le message de détection d'erreur et le transmet 116_{R} à l'entité de contrôle EC (Tx. Det. Err.).

L'entité de contrôle EC reçoit 117_{C} donc le message de détection d'erreur, initialement généré par l'entité d'exécution EE en tenant compte d'au moins une règle associée au flux à surveiller et transmis par l'intermédiaire de l'entité de gestion de règles EGR (Rx. Det. Err.).

A réception de ce message de détection d'erreur, l'entité de contrôle peut agir 118_{C} sur la communication multimédia, en effectuant au moins une action appartenant au groupe comprenant :
- interruption de la communication,
- émission d'un message spécifique,
- émission d'une alarme,
- modification d'au moins un compteur statistique,
- insertion d'une information dans un ticket de taxation (« Charging Data Record », ou CDR en anglais),
- etc.

De ce fait, dès qu'un message d'un flux à surveiller est reçu par l'entité d'exécution EE, il est possible, pour l'entité de contrôle EC, d'agir rapidement sur la communication multimédia.

Comme indiqué précédemment, les règles que l'entité d'exécution doit appliquer peuvent être définies par l'entité de contrôle au cours d'une phase préalable de configuration 10.

Plus précisément, au cours d'une telle phase de configuration 10, mise en oeuvre préalablement à la phase de traitement 11, l'opérateur du réseau de communication définit 101_{C}, par l'intermédiaire de son entité de contrôle EC, au moins une règle associée à au moins un flux à surveiller (Def. R.), et éventuellement à au moins un flux média.

L'entité de contrôle EC transmet 102_{C} ensuite un message de requête en notification de détection d'erreur à l'entité de gestion de règles EGR (Tx R.). Un tel message de requête en notification de détection d'erreur porte la ou les règles préalablement définies.

L'entité de gestion de règles EGR reçoit 103_{R} donc le message de requête en notification de détection d'erreur (Rx R.)

L'entité de gestion de règles EGR met en forme le message de requête en notification de détection d'erreur et le transmet 104_{R} à l'entité d'exécution EE (Tx R.)

L'entité d'exécution EE reçoit 105_{E} donc le message de requête en notification de détection d'erreur portant la ou les règles préalablement définies, transmis par l'entité de contrôle EC par l'intermédiaire de l'entité de gestion de règles EGR (Rx R.).

### 5.2 Description d'un mode de réalisation particulier

On décrit ci-après plus en détail un exemple de mise en oeuvre de l'invention dans un réseau de communication mettant en oeuvre une entité de contrôle de type AF ou P-CSCF, une entité de gestion de règles de type PCRF, et une entité d'exécution de type PCEF intégrée dans une passerelle d'accès GW.

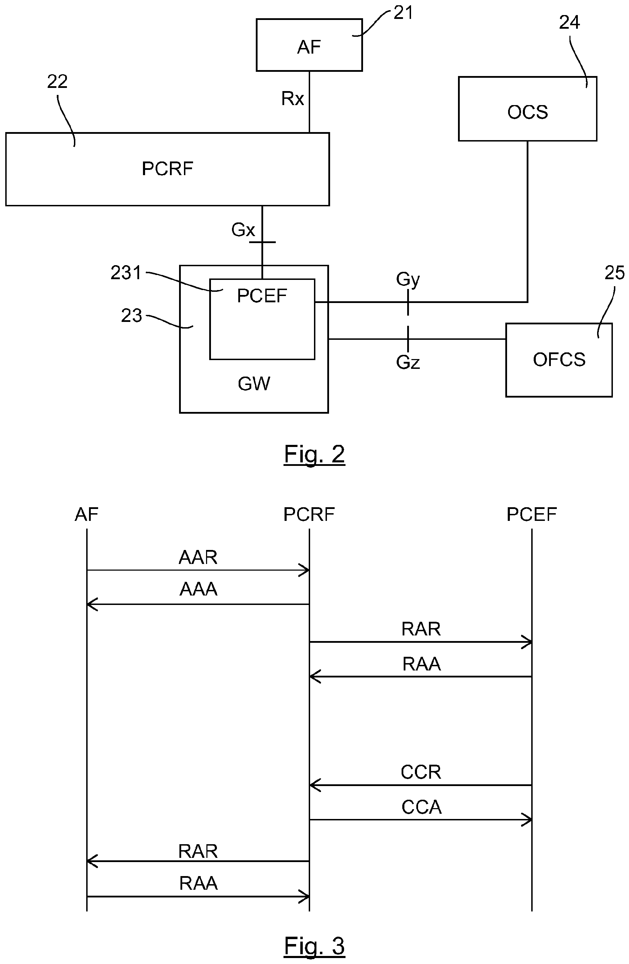

La structure d'un tel réseau est illustrée en figure 2.

Plus précisément, un tel réseau de communication comprend une entité de contrôle AF 21 communiquant avec une entité de gestion de règles PCRF 22 par l'intermédiaire d'une interface Rx, et une entité d'exécution PCEF 231, intégrée à une passerelle GW 23, communiquant avec l'entité de gestion de règles PCRF 22 par l'intermédiaire d'une interface Gx. L'entité PCEF 231 communique également avec un système OCS 24 (en anglais « Online Charging System », en français « système de tarification en ligne ») par l'intermédiaire d'une interface Gy, et avec un système OFCS 25 (en anglais « Offline Charging System », en français « système de tarification hors ligne ») par l'intermédiaire d'une interface Gz.

Selon ce mode de réalisation, afin de détecter rapidement un problème de communication multimédia, l'entité de contrôle AF 21 autorise l'entité d'exécution PCEF 231 à analyser les messages ICMP.

On rappelle que, selon l'art antérieur, de tels messages ICMP reçus lors d'une phase de communication sont directement écartés par l'entité d'exécution PCEF 231 car non négociés dans le protocole SDP lors de la phase d'établissement de la communication. En particulier, l'entité de contrôle (qui contrôle notamment l'entité d'exécution) ne donne, selon l'art antérieur, aucune instruction à l'entité d'exécution quant au traitement des messages ICMP reçus.

En particulier, l'entité de contrôle AF 21 autorise selon ce mode de réalisation les messages ICMP de type « Destination Unreachable ». Les autres types de messages ICMP, notamment les messages de type « Ping », peuvent présenter des failles de sécurité, et restent donc non autorisés.

De plus, selon ce mode de réalisation, les entités de contrôle AF 21, de gestion de règles PCRF 22, et d'exécution PCEF 231 autorisent la définition et la communication de règles permettant de détecter un problème de communication multimédia, par exemple lorsqu'un seuil de détection est dépassé, afin de détecter rapidement un problème de communication multimédia.

Ainsi, l'invention propose, selon ce mode de réalisation, de modifier le fonctionnement de l'entité de contrôle AF 21, tel qu'actuellement décrit dans la norme TS 29.214, afin d'autoriser le protocole ICMP dans la description des flux médias, de permettre la configuration d'un seuil de détection d'un problème à partir d'un ensemble de règles, et de rendre possible la notification de signalement de franchissement de seuil, i.e. la génération d'un message de détection d'erreur.

L'invention propose également, selon ce mode de réalisation, de modifier le fonctionnement de l'entité de gestion de règles PCRF 22, afin de relayer l'information d'autorisation ICMP, de relayer la configuration du seuil de détection d'un problème et en demander la notification à l'entité d'exécution PCEF 231, puis relayer les notifications associées au franchissement de seuil.

Enfin, l'invention propose, selon ce mode de réalisation, de modifier le fonctionnement de l'entité d'exécution PCEF 231, afin d'installer les règles correspondantes, prendre en compte le seuil de détection d'un problème reçu, et notifier le franchissement de seuil.

On note que l'entité qui contrôle le dépassement de seuil est de préférence l'entité d'exécution PCEF 231. En effet, c'est elle qui gère les flux média ; les flux ICMP peuvent donc également être gérés par le PCEF. Ainsi, à réception d'un message d'erreur ICMP, notamment de type « Destination Unreachable », l'entité d'exécution PCEF 231 peut identifier le flux média ayant provoqué le message d'erreur ICMP, et obtenir les règles associées.

Afin d'illustrer l'invention, on présente, en relation avec la figure 3, un chronogramme illustrant la détection, le relais et la gestion d'un problème de communication multimédia dans un réseau tel que celui illustré en figure 2. Plus précisément, la figure 3 illustre les messages échangés en utilisant le protocole DIAMETER tel que décrit dans la norme TS 29.211.

On considère à titre d'exemple que le seuil de détection d'un problème pour un type de média donné est disponible sur l'entité de contrôle AF 21. Par exemple, l'entité de contrôle AF est le P-CSCF, sur lequel on a configuré que pour les flux RTP associés à un certain type de média (par exemple audio, ou vidéo, ou texte), la réception de 20 messages ICMP de type « Destination Unreachable » dans un délai de 1 seconde est caractéristique d'une perte de connectivité. On définit ainsi au niveau de l'entité de contrôle une règle associée aux flux ICMP, selon laquelle si le nombre de messages ICMP se rapportant aux flux média RTP du type considéré sur une période de 1 seconde est supérieur ou égal à 20, une notification de dépassement de seuil doit être émise.

Au cours d'une phase de configuration, mise en oeuvre lors d'une phase préalable à l'établissement d'une communication multimédia ou lorsque la communication multimédia est établie, l'entité de contrôle AF 21 indique à l'entité de gestion des règles PCRF 22, via l'interface Rx, qu'elle souhaite être notifiée pour le dépassement de ce seuil de détection.

Pour ce faire, comme indiqué précédemment, l'entité de contrôle AF 21 dispose de nouvelles fonctionnalités lui permettant notamment de transmettre à l'entité d'exécution PCEF 231, par l'intermédiaire de l'entité de gestion de règles PCRF 22, un message de requête en notification de détection d'erreur (i.e., selon cet exemple, en notification de dépassement de seuil).

Par exemple, l'entité de contrôle AF 21 envoie à l'entité de gestion de règles PCRF 22 un message AAR (« Authorize/Authenticate-Request ») de requête en notification de détection d'erreur, sous la forme suivante :

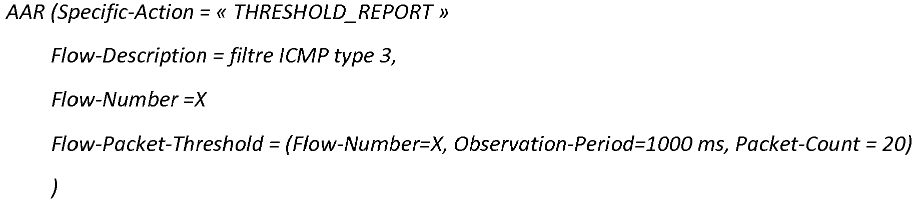

En particulier, un tel message AAR porte la ou les règles définies précédemment, et notamment des informations sur le seuil de détection au-delà duquel l'entité de contrôle doit être notifiée d'un problème de communication.

Par exemple, le message AAR porte un attribut AVP (« Attribute Value Pair ») relatif à une action spécifique de requête en notification en cas de dépassement d'un seuil de détection, noté

### « THRESHOLD_REPORT ».

Le message AAR porte également un attribut AVP relatif à au moins un type de flux autorisé pour transporter des informations sur des flux média, sous la forme d'un AVP de description de flux, noté AVP « Flow Description ». Le message AAR de requête en notification de détection d'erreur comprend ainsi un attribut permettant d'autoriser les flux ICMP de type 3 lors de la communication des informations de sessions média, notamment dans le sens montant (i.e. en direction du coeur de réseau).

Cet AVP « Flow-Description » associé au flux ICMP peut être complété par un identifiant de type de média, par exemple un AVP de numéro de flux, noté AVP « Flow-Number ».

Le message AAR porte également un nouvel attribut AVP, noté AVP « Flow-Packet-Threshold » définissant, pour un flux à surveiller, la valeur du seuil de détection.

Par exemple, l'AVP « Flow-Packet-Threshold » est de type « groupé » (en anglais « Grouped ») et défini comme suit : 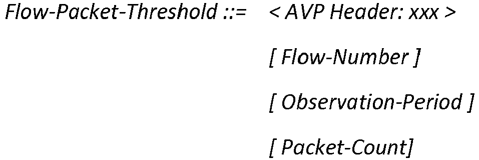 où l'AVP « Flow-Number » se rapporte ici au flux surveillé (par exemple un flux ICMP), l'AVP « Observation-Period » définit la durée d'un intervalle de mesure, par exemple 1 seconde, et l'AVP « Packet-Count » le nombre maximum de paquets reçus durant cet intervalle, par exemple 20 paquets ICMP se rapportant à un certain flux média.

On note que le message AAR de requête en notification de détection d'erreur, par exemple au sein de l'AVP « Flow-Packet-Threshold », peut également porter un attribut AVP permettant d'identifier un type de média (par exemple via un numéro de flux) auquel doit se rapporter le flux ICMP à surveiller. En l'absence d'un tel attribut, on surveille les flux ICMP se rapportant à tout type de média.

A réception du message AAR de requête en notification de détection d'erreur par l'entité de gestion de règles PCRF 22, cette dernière peut accuser réception par l'envoi d'un message AAA (« Authorize/Authenticate-Answer ») à l'entité de contrôle AF 21.

L'entité de gestion de règles PCRF 22 est chargée de relayer à l'entité d'exécution PCEF 231 la politique de détection demandée. L'entité d'exécution PCEF 231 est quant à elle chargée d'appliquer la politique de détection demandée.

Pour ce faire, l'entité de gestion de règles PCRF 22 met en forme le message AAA de requête en notification de détection d'erreur et l'envoie à l'entité d'exécution PCEF 231 sous la forme d'un message RAR (« Re-Auth-Request ») de requête en notification de détection d'erreur, par exemple :

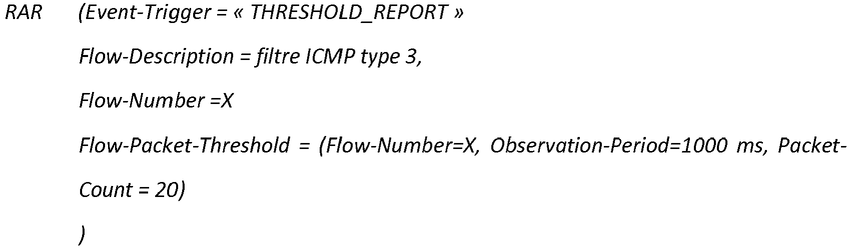

Ainsi, grâce à l'utilisation de l'AVP « Flow-Description », l'entité d'exécution PCEF 231 est informée de l'autorisation de réception et d'analyse desdits flux ICMP.

De même, l'AVP « Flow-Packet-Threshold »est ajouté dans les règles PCC appropriées (par exemple dans l'AVP « Charging Rule Install »), et transmis à l'entité d'exécution PCEF 231.

Enfin, la nouvelle valeur « THRESHOLD_REPORT » est définie pour l'AVP « Event-Trigger », en association avec l'AVP « Flow-Packet-Threshold », qui contiennent l'identifiant « Flow-Number » du ou des flux à superviser.

A réception du message RAR de requête en notification de détection d'erreur par l'entité d'exécution PCEF 231, cette dernière peut accuser réception par l'envoi d'un message RAA (« Re-Auth -Answer ») à l'entité de gestion de règles PCRF 22.

L'entité d'exécution PCEF 231 installe les règles définies dans le message RAR de requête en notification de détection d'erreur, notamment les règles de filtrage. Elle prend également en compte le contenu de l'AVP « Flow-Packet-Threshold » pour déterminer les flux à superviser et les valeurs de seuil de détection.

Au cours d'une phase de traitement, mise en oeuvre lorsque la communication multimédia est établie, l'entité d'exécution PCEF 231 surveille le ou les flux identifiés dans le message RAR de requête en notification de détection d'erreur, par exemple le flux ICMP de type 3.

Lors de la réception d'un message d'erreur ICMP, l'entité d'exécution PCEF 231 en analyse le contenu. En particulier, l'entité d'exécution PCEF 231 (ou éventuellement la fonction TDF « Traffic Détection Function », équivalente à la fonction DPI « Deep Packet Inspection ») analyse le contenu du champ « en-tête Internet » (en anglais « Internet Header ») du message ICMP, afin d'identifier le message ayant généré l'erreur ICMP, et ainsi rattacher cette erreur au flux média correspondant. Cette identification repose par exemple sur l'analyse des champs « Destination IP » et/ou « Destination Port UDP » contenus dans le champ « Internet Header » du message ICMP de type 3, tels que définis dans le document RFC 792 précité.

Lorsque le ou les messages d'erreur ICMP reçus satisfont une règle définit au cours de la phase de configuration, par exemple la règle associée aux flux média RTP de type audio selon laquelle si le nombre de messages ICMP associés aux flux média RTP de type audio sur une période de 1 seconde est supérieur ou égal à 20, une notification de dépassement de seuil est émise.

En d'autres termes, si durant la période « Observation-Period » le nombre de paquet ICMP reçus associés aux flux média RTP de type audio est au moins égal à « Packet-Count », l'action spécifique « THRESHOLD REPORT » est émise de l'entité d'exécution PCEF 231 vers l'entité de gestion de règles PCRF 22, qui la transfère à son tour vers l'entité de contrôle AF 21.

Plus précisément, si le nombre de paquets ICMP reçus durant la période d'observation atteint le seuil défini pour les flux média RTP de type audio, l'entité d'exécution PCEF 231 émet un message de détection d'erreur de type CCR (« Credit-Control-Request ») vers l'entité de gestion de règles PCRF 22, en précisant qu'il s'agit de l'évènement Event-Trigger « THRESHOLD_REPORT » pour le flux ICMP surveillé.

Par exemple, le message CCR de détection d'erreur prend la forme suivante : 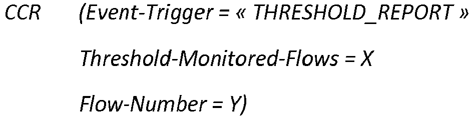 où l'AVP « Threshold-Monitored-Flows » permet d'identifier le flux surveillé (ICMP) et l'AVP « Flow-Number » permet d'identifier le type de média qui a généré le dépassement de seuil (flux audio selon l'exemple ci-dessus).

Par exemple, l'AVP « Threshold-Monitored-Flows » est de type « Grouped », et défini comme suit :

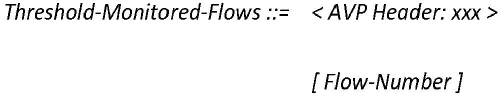

On peut alors mettre fin à l'observation pour ce flux ICMP. En variante, la surveillance est maintenue tant qu'une condition d'arrêt n'est pas remplie.

A réception du message CCR de détection d'erreur par l'entité de gestion de règles PCRF 22, cette dernière peut accuser réception par l'envoi d'un message CCA (« Credit-Control-Answer ») à l'entité d'exécution PCEF 231.

Lorsque l'entité de gestion de règles PCRF 22 reçoit, de l'entité d'exécution PCEF 231, le message CCR de détection d'erreur, et en particulier l'AVP « Event-Trigger » contenant la valeur « THRESHOLD_REPORT », l'entité de gestion de règles PCRF 22 fournit l'information à l'entité de contrôle AF 21.

Pour ce faire, l'entité de gestion de règles PCRF 22 met en forme le message CCR de détection d'erreur et l'envoie à l'entité de contrôle AF 21 sous la forme d'un message RAR de détection d'erreur, par exemple :

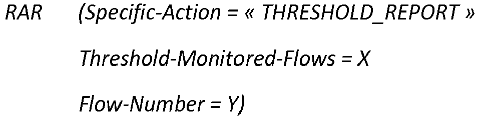

L'entité de contrôle AF 21 reçoit ainsi un message RAR de détection d'erreur portant l'AVP d'action spécifique « THRESHOLD_REPORT » et éventuellement l'AVP identifiant le flux surveillé ayant conduit à l'émission d'un message de détection d'erreur (AVP « Threshold-Monitored-Flows »).

A réception du message RAR de détection d'erreur par l'entité de contrôle AF 21, cette dernière peut accuser réception par l'envoi d'un message RAA à l'entité de gestion de règles PCRF 22.

L'entité de contrôle AF 21 peut alors engager une action sur la communication multimédia, par exemple l'arrêt immédiat de la communication, l'émission d'un message de contrôle approprié, et/ou l'émission d'une alarme opérateur, et/ou la modification de compteurs statistiques, et/ou l'insertion d'une information dans un ticket de taxation, etc.

De cette façon, on dispose d'un nouveau mécanisme pour détecter un problème de communication, compatible avec les équipements utilisant la technologie VoLTE ou VoWiFi.

### 5.3 Structures

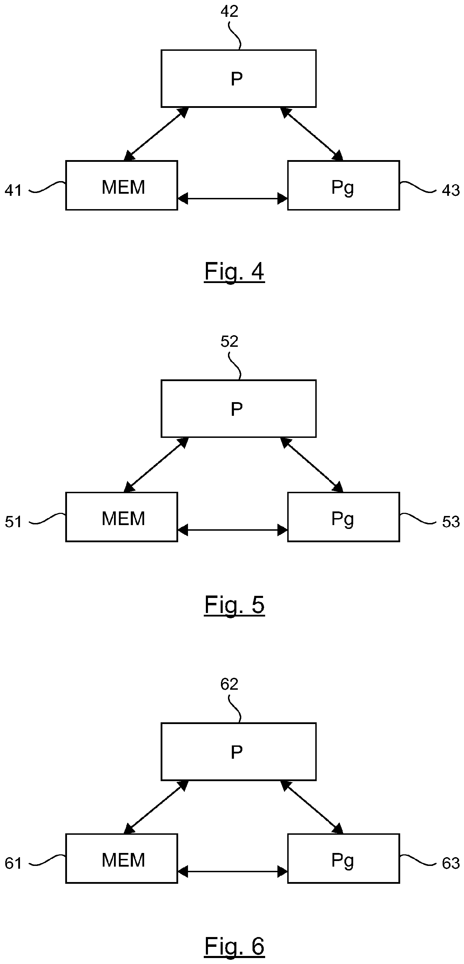

On présente finalement, en relation avec les figures 4 à 6, les structures simplifiées d'une entité d'exécution, d'une entité de contrôle, et d'une entité de gestion de règles selon l'un des modes de réalisation décrits ci-dessus. En variante, ces trois entités sont des entités purement logicielles.

Comme illustré en figure 4, une entité d'exécution comprend une mémoire 41 comprenant une mémoire tampon, une unité de traitement 42, équipée par exemple d'une machine de calcul reprogrammable ou d'une machine de calcul dédiée, par exemple un processeur P, et pilotée par le programme d'ordinateur 43, mettant en oeuvre le procédé de détection d'un problème de communication multimédia selon un mode de réalisation de l'invention.

A l'initialisation, les instructions de code du programme d'ordinateur 43 sont par exemple chargées dans une mémoire RAM avant d'être exécutées par le processeur de l'unité de traitement 42. L'unité de traitement 42 reçoit en entrée au moins un message appartenant à au moins un flux à surveiller.

Le processeur de l'unité de traitement 42 met en oeuvre les étapes du procédé de détection d'un problème de communication multimédia décrit précédemment, selon les instructions du programme d'ordinateur 43, pour générer un message de détection d'erreur si le ou les messages reçus correspondent à une règle préalablement définie.

Comme illustré en figure 5, une entité de contrôle comprend une mémoire 51 comprenant une mémoire tampon, une unité de traitement 52, équipée par exemple d'une machine de calcul reprogrammable ou d'une machine de calcul dédiée, par exemple un processeur P, et pilotée par le programme d'ordinateur 53, mettant en oeuvre le procédé de gestion d'un problème de communication multimédia selon un mode de réalisation de l'invention.

A l'initialisation, les instructions de code du programme d'ordinateur 53 sont par exemple chargées dans une mémoire RAM avant d'être exécutées par le processeur de l'unité de traitement 52. L'unité de traitement 52 reçoit en entrée au moins un message de détection d'erreur.

Le processeur de l'unité de traitement 52 met en oeuvre les étapes du procédé de gestion d'un problème de communication multimédia décrit précédemment, selon les instructions du programme d'ordinateur 53, pour engager une action spécifique, comme l'interruption de la communication, si un message de détection d'erreur est reçu.

Enfin, comme illustré en figure 6, une entité de gestion de règles comprend une mémoire 61 comprenant une mémoire tampon, une unité de traitement 62, équipée par exemple d'une machine de calcul reprogrammable ou d'une machine de calcul dédiée, par exemple un processeur P, et pilotée par le programme d'ordinateur 63, mettant en oeuvre le procédé de relais d'un problème de communication multimédia selon un mode de réalisation de l'invention.

A l'initialisation, les instructions de code du programme d'ordinateur 63 sont par exemple chargées dans une mémoire RAM avant d'être exécutées par le processeur de l'unité de traitement 62. L'unité de traitement 62 reçoit en entrée un message de détection d'erreur.

Le processeur de l'unité de traitement 62 met en oeuvre les étapes du procédé de relais d'un problème de communication multimédia décrit précédemment, selon les instructions du programme d'ordinateur 63, pour relayer le message de détection d'erreur à l'entité de contrôle.

## Revendications

1. Procédé de détection d'un problème de communication multimédia, mis en oeuvre par une entité d'exécution comprenant une phase de traitement (11) mettant en oeuvre :
- la réception (111_{E}) d'au moins un message, dit message reçu, appartenant à au moins un flux à surveiller se rapportant à au moins un flux média,
- la vérification (113_{E}) d'une correspondance entre ledit au moins un message reçu et au moins une règle associée audit au moins un flux à surveiller, et
lorsque ledit au moins un message reçu correspond à ladite règle, l'envoi (114_{E}) à une entité de contrôle, par l'intermédiaire d'une entité de gestion de règles, d'un message de détection d'erreur, et
une phase de configuration (10) préalable à ladite phase de traitement, mettant en oeuvre la réception d'un message de requête en notification de détection d'erreur, transmis par ladite entité de contrôle par l'intermédiaire de ladite entité de gestion de règles, ledit message de requête en notification de détection d'erreur portant ladite au moins une règle et un attribut relatif à au moins un type de flux autorisé pour transporter des informations sur des flux média.

2. Procédé selon la revendication 1 dans lequel ladite au moins une règle définissant un seuil de détection d'un problème de communication à partir d'un nombre prédéterminé de messages et une période prédéterminée, ledit message de détection d'erreur est généré, et envoyé à ladite entité de contrôle, lorsque le nombre de messages reçus pendant ladite période prédéterminée est supérieur ou égal au nombre prédéterminé de messages.

3. Procédé selon l'une quelconque des revendications 1 à 2 dans lequel ledit au moins un flux à surveiller est de type ICMP.

4. Procédé de gestion d'un problème de communication multimédia, mis en oeuvre par une entité de contrôle comprenant une phase de traitement (11) mettant en oeuvre :
- la réception (117_{C}) d'un message de détection d'erreur, généré par une entité d'exécution en tenant compte d'au moins une règle associée à au moins un flux à surveiller se rapportant à au moins un flux média, et transmis par l'intermédiaire d'une entité de gestion de règles, et
- une action (118_{C}) sur ladite communication à réception dudit message de détection d'erreur et
une phase de configuration (10) préalable à ladite phase de traitement, mettant en oeuvre :
- la définition (101_{C}) de ladite au moins une règle ; et
- la transmission (102_{C}) d'un message de requête en notification de détection d'erreur à ladite entité d'exécution, par l'intermédiaire de ladite entité de gestion de règles, ledit message de requête en notification de détection d'erreur portant ladite au moins une règle et un attribut relatif à au moins un type de flux autorisé pour transporter des informations sur des flux média.

5. Procédé selon la revendication 4 dans lequel ladite action appartient au groupe comprenant :
- interruption de ladite communication,
- émission d'un message spécifique,
- émission d'une alarme,
- modification d'au moins un compteur statistique,
- insertion d'une information dans un ticket de taxation.

6. Procédé selon la revendication 4 dans lequel ladite au moins une règle définit un seuil de détection d'un problème de communication à partir d'un nombre prédéterminé de messages reçus sur une période prédéterminée.

7. Procédé selon l'une quelconque des revendications 4 à 6 dans lequel ledit message de requête en notification de détection d'erreur porte également un attribut relatif à au moins un type de flux autorisé pour transporter des informations sur des flux média.

8. Procédé de relais d'un problème de communication multimédia, mis en oeuvre par une entité de gestion de règles comprenant une phase de traitement (11) mettant en oeuvre :
- la réception (115_{R}) d'un message de détection d'erreur, généré par une entité d'exécution en tenant compte d'au moins une règle associée à au moins un flux à surveiller se rapportant à au moins un flux média, et
- la transmission (116_{R}) dudit message de détection d'erreur à une entité de contrôle, et
une phase de configuration (10) préalable à ladite phase de traitement, mettant en oeuvre :
- la réception (103_{R}) d'un message de requête en notification de détection d'erreur, transmis par ladite entité de contrôle, ledit message de requête en notification de détection d'erreur portant ladite au moins une règle et un attribut relatif à au moins un type de flux autorisé pour transporter des informations sur des flux média, et
- la transmission (104_{R}) dudit message de requête en notification de détection d'erreur à ladite entité d'exécution.

9. Entité d'exécution apte à détecter un problème de communication multimédia comprenant:
- un module de réception d'au moins un message, dit message reçu, appartenant à au moins un flux à surveiller se rapportant à au moins un flux média,
- un module de vérification d'une correspondance entre ledit au moins un message reçu et au moins une règle associée audit au moins un flux à surveiller, et
- un module d'envoi à une entité de contrôle, par l'intermédiaire d'une entité de gestion de règles, d'un message de détection d'erreur lorsque ledit au moins un message reçu correspond à ladite règle, et
- un module de réception d'un message de requête en notification de détection d'erreur, transmis par ladite entité de contrôle par l'intermédiaire de ladite entité de gestion de règles, ledit message de requête en notification de détection d'erreur portant ladite au moins une règle et un attribut relatif à au moins un type de flux autorisé pour transporter des informations sur des flux média .

10. Entité de contrôle apte à gérer un problème de communication multimédia comprenant:
- un module de réception d'un message de détection d'erreur, généré par une entité d'exécution en tenant compte d'au moins une règle associée à au moins un flux à surveiller se rapportant à au moins un flux média, et transmis par l'intermédiaire d'une entité de gestion de règles, et
- un module d'action sur ladite communication à réception dudit message de détection d'erreur, et
- un module de transmission d'un message de requête en notification de détection d'erreur à ladite entité d'exécution, par l'intermédiaire de ladite entité de gestion de règles, ledit message de requête en notification de détection d'erreur portant ladite au moins une règle et un attribut relatif à au moins un type de flux autorisé pour transporter des informations sur des flux média.

11. Entité de gestion de règles apte à relayer un problème de communication multimédia comprenant:
- un module de réception d'un message de détection d'erreur, généré par une entité d'exécution en tenant compte d'au moins une règle associée à au moins un flux à surveiller se rapportant à au moins un flux média, et
- un module de transmission dudit message de détection d'erreur à une entité de contrôle,
- un module de réception d'un message de requête en notification de détection d'erreur, transmis par ladite entité de contrôle, ledit message de requête en notification de détection d'erreur portant ladite au moins une règle et un attribut relatif à au moins un type de flux autorisé pour transporter des informations sur des flux média, et
- un module de transmission dudit message de requête en notification de détection d'erreur à ladite entité d'exécution.

12. Programme d'ordinateur comportant des instructions pour la mise en oeuvre d'un procédé selon l'une quelconque des revendications 1 à 7 lorsque ce programme est exécuté par un processeur.

## Patentansprüche

1. Verfahren zur Erkennung eines Multimedia-Kommunikationsproblems, das von einer Ausführungseinheit durchgeführt wird, umfassend eine Verarbeitungsphase (11), bei der Folgendes durchgeführt wird:
- das Empfangen (111_{E}) wenigstens einer Nachricht, empfangene Nachricht genannt, die zu wenigstens einem zu überwachenden Strom gehört, der sich auf wenigstens einen Medienstrom bezieht,
- das Überprüfen (113_{E}) einer Entsprechung zwischen der wenigstens einen empfangenen Nachricht und wenigstens einer Regel, die dem wenigstens einen zu überwachenden Strom zugeordnet ist, und
wenn die wenigstens eine empfangene Nachricht der Regel entspricht, das Senden (114_{E}), an eine Kontrolleinheit mittels einer Regelverwaltungseinheit, einer Fehlererkennungsnachricht, und
eine Konfigurationsphase (10) vor der Verarbeitungsphase, die den Empfang einer Anfragenachricht zur Fehlererkennungsbenachrichtigung durchführt, die von der Kontrolleinheit mittels der Regelverwaltungseinheit übertragen wird, wobei die Anfragenachricht zur Fehlererkennungsbenachrichtigung die wenigstens eine Regel und ein Attribut bezogen auf wenigstens eine Art von Strom trägt, der zum Transport von Informationen auf Medienströmen zugelassen ist.

2. Verfahren nach Anspruch 1, wobei, wenn die wenigstens eine Regel eine Erkennungsschwelle für ein Kommunikationsproblem anhand einer vorbestimmten Anzahl von Nachrichten und einer vorbestimmten Zeitspanne festlegt, die Fehlererkennungsnachricht erzeugt und an die Kontrolleinheit gesendet wird, wenn die Anzahl von Nachrichten, die während der vorbestimmten Zeitspanne empfangen werden, größer als oder gleich der vorbestimmten Anzahl von Nachrichten ist.

3. Verfahren nach einem der Ansprüche 1 bis 2, wobei der wenigstens eine zu überwachende Strom vom Typ ICMP ist.

4. Verfahren zur Verwaltung eines Multimedia-Kommunikationsproblems, das von einer Kontrolleinheit durchgeführt wird, umfassend eine Verarbeitungsphase (11), bei der Folgendes durchgeführt wird:
- das Empfangen (117c) einer Fehlererkennungsnachricht, die von einer Ausführungseinheit erzeugt wird, unter Berücksichtigung wenigstens einer Regel, die wenigstens einem zu überwachenden Strom zugeordnet ist, der sich auf wenigstens einen Medienstrom bezieht und mittels einer Regelverwaltungseinheit übertragen wird, und
- eine Maßnahme (118c) bezüglich der Kommunikation bei Empfang der Fehlererkennungsnachricht und
eine Konfigurationsphase (10) vor der Verarbeitungsphase, bei der Folgendes durchgeführt wird:
- das Festlegen (101c) der wenigstens einen Regel; und
- das Übertragen (102c) einer Anfragenachricht zur Fehlererkennungsbenachrichtigung an die Ausführungseinheit mittels der Regelverwaltungseinheit, wobei die Anfragenachricht zur Fehlererkennungsbenachrichtigung die wenigstens eine Regel und ein Attribut bezogen auf wenigstens eine Art von Strom trägt, der zum Transport von Informationen auf Medienströmen zugelassen ist.

5. Verfahren nach Anspruch 4, wobei die Maßnahme zu der Gruppe gehört, die Folgendes umfasst:
- Unterbrechung der Kommunikation,
- Aussendung einer spezifischen Nachricht,
- Aussendung eines Alarms,
- Änderung wenigstens eines statistischen Zählers,
- Einfügung einer Information in einen Abrechnungsdatensatz.

6. Verfahren nach Anspruch 4, wobei die wenigstens eine Regel eine Erkennungsschwelle für ein Kommunikationsproblem anhand einer vorbestimmten Anzahl von Nachrichten, die über eine vorbestimmte Zeitspanne empfangen werden, festlegt.

7. Verfahren nach einem der Ansprüche 4 bis 6, wobei die Anfragenachricht zur Fehlererkennungsbenachrichtigung ebenfalls ein Attribut bezogen auf wenigstens eine Art von Strom trägt, der zum Transport von Informationen auf Medienströmen zugelassen ist.

8. Verfahren zur Weiterleitung eines Multimedia-Kommunikationsproblems, das von einer Kontrolleinheit durchgeführt wird, umfassend eine Verarbeitungsphase (11), bei der Folgendes durchgeführt wird:
- das Empfangen (115_{R}) einer Fehlererkennungsnachricht, die von einer Ausführungseinheit erzeugt wird, unter Berücksichtigung wenigstens einer Regel, die wenigstens einem zu überwachenden Strom zugeordnet ist, der sich auf wenigstens einen Medienstrom bezieht, und
- das Übertragen (116_{R}) der Fehlererkennungsnachricht an eine Kontrolleinheit, und
eine Konfigurationsphase (10) vor der Verarbeitungsphase, bei der Folgendes durchgeführt wird:
- das Empfangen (103_{R}) einer Anfragenachricht zur Fehlererkennungsbenachrichtigung, die von der Kontrolleinheit übertragen wird, wobei die Anfragenachricht zur Fehlererkennungsbenachrichtigung die wenigstens eine Regel und ein Attribut bezogen auf wenigstens eine Art von Strom trägt, der zum Transport von Informationen auf Medienströmen zugelassen ist, und
- das Übertragen (104_{R}) der Anfragenachricht zur Fehlererkennungsbenachrichtigung an die Ausführungseinheit.

9. Ausführungseinheit, die geeignet ist, ein Multimedia-Kommunikationsproblem zu erkennen, umfassend:
- ein Modul zum Empfang wenigstens einer Nachricht, empfangene Nachricht genannt, die zu wenigstens einem zu überwachenden Strom gehört, der sich auf wenigstens einen Medienstrom bezieht,
- ein Modul zur Überprüfung einer Entsprechung zwischen der wenigstens einen empfangenen Nachricht und wenigstens einer Regel, die dem wenigstens einen zu überwachenden Strom zugeordnet ist, und
- ein Modul zum Senden einer Fehlererkennungsnachricht an eine Kontrolleinheit mittels einer Regelverwaltungseinheit, wenn die wenigstens eine empfangene Nachricht der Regel entspricht, und
- ein Modul zum Empfang einer Anfragenachricht zur Fehlererkennungsbenachrichtigung, die von der Kontrolleinheit mittels der Regelverwaltungseinheit übertragen wird, wobei die Anfragenachricht zur Fehlererkennungsbenachrichtigung die wenigstens eine Regel und ein Attribut bezogen auf wenigstens eine Art von Strom trägt, der zum Transport von Informationen auf Medienströmen zugelassen ist.

10. Kontrolleinheit, die geeignet ist, ein Multimedia-Kommunikationsproblem zu verwalten, umfassend:
- ein Modul zum Empfang einer Fehlererkennungsnachricht, die von einer Ausführungseinheit erzeugt wird, unter Berücksichtigung wenigstens einer Regel, die wenigstens einem zu überwachenden Strom zugeordnet ist, der sich auf wenigstens einen Medienstrom bezieht und mittels einer Regelverwaltungseinheit übertragen wird, und
- ein Modul für eine Maßnahme bezüglich der Kommunikation bei Empfang der Fehlererkennungsnachricht, und
- ein Modul zur Übertragung einer Anfragenachricht zur Fehlererkennungsbenachrichtigung an die Ausführungseinheit mittels der Regelverwaltungseinheit, wobei die Anfragenachricht zur Fehlererkennungsbenachrichtigung die wenigstens eine Regel und ein Attribut bezogen auf wenigstens eine Art von Strom trägt, der zum Transport von Informationen auf Medienströmen zugelassen ist.

11. Regelverwaltungseinheit, die geeignet ist, ein Multimedia-Kommunikationsproblem weiterzuleiten, umfassend:
- ein Modul zum Empfang einer Fehlererkennungsnachricht, die von einer Ausführungseinheit erzeugt wird, unter Berücksichtigung wenigstens einer Regel, die wenigstens einem zu überwachenden Strom zugeordnet ist, der sich auf wenigstens einen Medienstrom bezieht, und
- ein Modul zur Übertragung der Fehlererkennungsnachricht an eine Kontrolleinheit,
- ein Modul zum Empfang einer Anfragenachricht zur Fehlererkennungsbenachrichtigung, die von der Kontrolleinheit übertragen wird, wobei die Anfragenachricht zur Fehlererkennungsbenachrichtigung die wenigstens eine Regel und ein Attribut bezogen auf wenigstens eine Art von Strom trägt, der zum Transport von Informationen auf Medienströmen zugelassen ist, und
- ein Modul zur Übertragung der Anfragenachricht zur Fehlererkennungsbenachrichtigung an die Ausführungseinheit.

12. Computerprogramm umfassend Anweisungen für die Durchführung eines Verfahrens nach einem der Ansprüche 1 bis 7, wenn dieses Programm von einem Prozessor ausgeführt wird.

## Claims

1. Method for detecting a multimedia communication problem, implemented by an execution entity, comprising a processing phase (11) implementing:
- receiving (111_{E}) at least one message, called received message, belonging to at least one flow to be monitored relating to at least one media flow,
- verifying (113_{E}) a correspondence between said at least one received message and at least one rule associated with said at least one flow to be monitored, and
- when said at least one received message corresponds to said rule, sending (114_{E}) an error detection message to a control entity via a rule management entity, and
- a configuration phase (10) prior to said processing phase, implementing receiving an error detection notification request message, transmitted by said control entity via said rule management entity, said error detection notification request message carrying said at least one rule and an attribute relating to at least one type of flow authorized to transport information on media flows.

2. Method according to Claim 1, wherein, with said at least one rule defining a threshold for detecting a communication problem based on a predetermined number of messages and a predetermined period, said error detection message is generated, and sent to said control entity, when the number of messages received during said predetermined period is greater than or equal to the predetermined number of messages.

3. Method according to either one of Claims 1 and 2, wherein said at least one flow to be monitored is an ICMP flow.

4. Method for managing a multimedia communication problem, implemented by a control entity, comprising a processing phase (11) implementing:
- receiving (117_{C}) an error detection message, generated by an execution entity, taking into account at least one rule associated with at least one flow to be monitored relating to at least one media flow, and transmitted via a rule management entity, and
- acting (118_{C}) on said communication upon receiving said error detection message, and a configuration phase (10) prior to said processing phase, implementing:
- defining (101_{C}) said at least one rule; and
- transmitting (102_{C}) an error detection notification request message to said execution entity via said rule management entity, said error detection notification request message carrying said at least one rule and an attribute relating to at least one type of flow authorized to transport information on media flows.

5. Method according to Claim 4, wherein said action belongs to the group comprising:
- interrupting said communication,
- transmitting a specific message,
- emitting an alarm,
- modifying at least one statistical counter,
- inserting information in a charging data record.

6. Method according to Claim 4, wherein said at least one rule defines a threshold for detecting a communication problem based on a predetermined number of messages received over a predetermined period.

7. Method according to any one of Claims 4 to 6, wherein said error detection notification request message also carries an attribute relating to at least one type of flow authorized to transport information on media flows.

8. Method for relaying a multimedia communication problem, implemented by a rule management entity, comprising a processing phase (11) implementing:
- receiving (115_{R}) an error detection message, generated by an execution entity, taking into account at least one rule associated with at least one flow to be monitored relating to at least one media flow, and
- transmitting (116_{R}) said error detection message to a control entity, and a configuration phase (10) prior to said processing phase, implementing:
- receiving (103_{R}) an error detection notification request message transmitted by said control entity, said error detection notification request message carrying said at least one rule and an attribute relating to at least one type of flow authorized to transport information on media flows, and
- transmitting (104_{R}) said error detection notification request message to said execution entity.

9. Execution entity able to detect a multimedia communication problem, comprising:
- a module for receiving at least one message, called received message, belonging to at least one flow to be monitored relating to at least one media flow,
- a module for verifying a correspondence between said at least one received message and at least one rule associated with said at least one flow to be monitored, and
- a module for sending an error detection message to a control entity, via a rule management entity, when said at least one received message corresponds to said rule, and
- a module for receiving an error detection notification request message, transmitted by said control entity via said rule management entity, said error detection notification request message carrying said at least one rule and an attribute relating to at least one type of flow authorized to transport information on media flows.

10. Control entity able to manage a multimedia communication problem, comprising:
- a module for receiving an error detection message, generated by an execution entity, taking into account at least one rule associated with at least one flow to be monitored relating to at least one media flow, and transmitted via a rule management entity, and
- a module for acting on said communication upon receiving said error detection message, and
- a module for transmitting an error detection notification request message to said execution entity via said rule management entity, said error detection notification request message carrying said at least one rule and an attribute relating to at least one type of flow authorized to transport information on media flows.

11. Rule management entity able to relay a multimedia communication problem, comprising:
- a module for receiving an error detection message, generated by an execution entity, taking into account at least one rule associated with at least one flow to be monitored relating to at least one media flow, and
- a module for transmitting said error detection message to a control entity,
- a module for receiving an error detection notification request message transmitted by said control entity, said error detection notification request message carrying said at least one rule and an attribute relating to at least one type of flow authorized to transport information on media flows, and
- a module for transmitting said error detection notification request message to said execution entity.

12. Computer program comprising instructions for implementing a method according to any one of Claims 1 to 7 when this program is executed by a processor.
